# EUROPÄISCHE PATENTSCHRIFT

(11) **EP 0 682 968 B1**
(45) Veröffentlichungstag und Bekanntmachung des Hinweises auf die Patenterteilung: **14.01.1998**
(21) Anmeldenummer: 95107687.6
(22) Anmeldetag: 19.05.1995
(51) Int. Cl.: B01D 29/11, B01D 29/25, B01D 29/37

(54) **Filtereinrichtung**
Filtering device
Installation de filtrage

(30) Priorität: 19.05.1994 DE 9408254 U
(43) Veröffentlichungstag der Anmeldung: 22.11.1995
(73) Patentinhaber: Winkler, Norbert, D-63699 Kefenrod (DE)
(72) Erfinder: Winkler, Norbert, D-63699 Kefenrod (DE)
(74) Vertreter: Müller-Wolff, Thomas, Dipl.-Ing.

(56) Entgegenhaltungen:
- EP-A- 0 548 397
- DE-A- 3 812 136
- GB-A- 1 374 109

## Beschreibung

Die Erfindung betrifft eine Filtereinrichtung für flüssige Medien, insbesondere für Schmutzwasser, bestehend aus einem Einlauftrichter, einem Filtergewebe und einem Schmutzabscheider.

Aus der DE 38 12 136 (Winkler System - Winkler) ist eine Vorrichtung zur Regenwassererfassung aus einem von einer Dachrinne abgehendem Fallrohr bekannt, bei der das Wasser über einen konzentrisch angeordneten Einlaßstutzen durch eine in einem Mittelteil gehaltene Siebeinrichtung in einen Spalt zwischen Abreißkragen und Unterteil gelenkt wird. Die durchströmte Siebeinrichtung weist von innen gesehen rückwärtig mit in Fallrichtung des Wassers sich abspreizende, zusammenhängende lamellenartige Ausformungen auf, die mit ihren Hochpunkten der Siebeinrichtung anliegen.

Die Funktion der bekannten Vorrichtung zur Regenwassererfassung beruht darauf, daß durch adhäsive Trennkräfte der größte Teil des Wassers in einen von der senkrechten sich abspreizenden Teil überführt wird, während der geringere zweite Teilstrom lediglich die Spülung des abgelagerten Schmutzes unterstützt. Die adhäsiven Kräfte werden durch einen die Siebeinrichtung ganzflächig abdeckenden Streckmetallkörper aufgebracht, dessen Oberfläche durch Aufrauhung stark vergrößert ist. Sie können aber auch durch Metallwolle, textile Strukturen, offenporige Poleurethanformen oder offenporige Keramikformen erzeugt werden.

In der Praxis haben sich die genannte Materialien zur Erzeugung der adhäsiven Kräfte bewährt. Es ist jedoch nicht für alle Anwendungsfälle erforderlich, derartig aufwendige Abspreizvorrichtungen zu verwenden, die zusätzlich den Nachteil einer größeren Verstopfungsneigung und einer schwierigen Reinigungsmöglichkeit aufweisen.

Aus der EP-A-0 548 397 (Winkler) ist auch eine Vorrichtung zur Regenwassererfassung bekannt, bei der die wässrige Suspension in einer Ebene senkrecht zur Schwerkraft in Rotation versetzt wird, wobei sich unter Einwirkung der Schwerkraft ein Wasserschleier ausbildet, der über eine poröse, kegelförmige Filterfläche geleitet wird, und daß die Feststoffpartikel im rotierenden Wasserschleier angereicht werden, während das gereinigte Wasser durch die poröse Filterfläche hindurchtritt und von dort abgeleitet wird.
Die Trennkräfte werden nunmehr durch Nutzung von Kapillareffekten aufgebracht, wobei die Siebeinrichtung vorzugsweise aus einem doppelt wirksamen Filterelement besteht, das eine verstärkte Ausbildung von Adhäsionskräften aufweist.

Aufgabe der vorliegenden Erfindung ist es daher, eine Filtereinrichtung der eingangs genannten Art derart zu verbessern, daß mit verhältnismäßig einfachen Mitteln eine wirkungsvolle Trennung von Schmutzpartikeln aus flüssigen Medien erfolgen kann.

Diese Aufgabe wird erfindungsgemäß durch die im Patentanspruch 1 angegebenen Merkmale gelöst. Es hat sich gezeigt, daß sich durch eine geschickte Anordnung der Einzelteile einer Filtereinrichtung die Trennkräfte an der Oberfläche des Filtergewebes auch mit verhältnismäßig einfachen Mitteln erzeugen lassen. Die Reinigung der erfindungsgemäßen Filtereinrichtung kann im Falle der Regenwasserfiltrierung unter normalen Bedingungen auf ein bis zweimal pro Jahr beschränkt werden.

Im folgenden wird die Erfindung anhand eines Ausführungsbeispieles näher erläutert. Es handelt sich dabei um ein bevorzugtes Ausführungsbeispiel, das den Schutzumfang der Erfindung in keiner Weise einschränken soll.

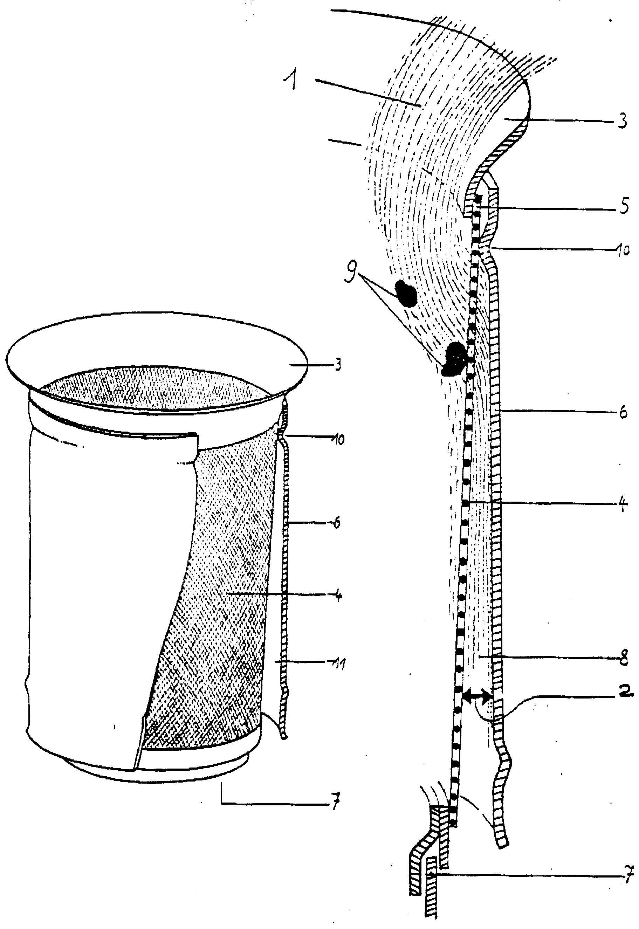

In Figur 1 ist ein Teilquerschnitt in Längsrichtung durch eine erfindungsgemäße Filtereinrichtung dargestellt. Der Teilquerschnitt zeigt die rechte Wandseite der erfindungsgemäßen Filtereinrichtung. Figur 2 stellt eine Außenansicht der erfindungsgemäßen Filtereinrichtung als Gesamtansicht dar.

Das Regenwasser 1 gelangt in die erfindungsgemäße Filtereinrichtung über einen beliebig geformten Einlauftrichter und gegebenenfalls über eine Dichtung in eine Ringdüse 3 (teilgeschnitten dargestellt). Am unteren Ende der Ringdüse 3 überlappt ein Gewebefilter 4, so daß sich hier eine Kontaktstelle 5 ausbildet.

Um die Kontaktstelle 5 und den unteren Teil der Ringdüse 3 ist der obere Teil einer Adhäsionsrückwand 6 geschoben, die sich in vertikaler Richtung nach unten bis zu einem Schmutzabscheider 7 erstreckt.

Das Schmutzwasser wird unterhalb der Ringdüse 3 in den Filterbereich umgelenkt und in zwei Teilströme aufgeteilt: den das Reinwasser enthaltenden, zur Adhäsionsrückwand 6 abgelenkten Teilstrom 8 und den den Schmutzanteil mitführenden Konzentratanteil 9.

Wichtig ist, daß der obere Teil der Adhäsionsrückwand 6 mindestens eine Ausbuchtung 10 in Form einer umlaufenden Noppe aufweist. Diese Ausbuchtung 10 liegt am Gewebefilter 4 an und bewirkt dort eine Adhäsionskraft, die den Reinwasseranteil aus dem Schmutzwasser abtrennt. Im weiteren Verlauf bewirkt der Reinwasseranteil 8 im sich langsam vergrößernden Spaltraum 11, daß zunehmend mehr Reinwasseranteile aus dem Schmutzwasser durch das Gewebefilter 4 abgezogen werden. Das liegt an einer auf das Schmutzwasser übertragenen Adhäsionswirkung des an der Adhäsionsrückwand 6 im Spalt 11 abfließenden Reinwassers 8. Sie wird durch den Reinwasseranteil 8 beim überstreichen der rückwärtigen Seite des Gewebefilters 4 erzeugt.

Diese zusätzliche Adhäsionswirkung nimmt gegen Ende des Spaltraumes 11 ab, so daß das Schmutzkonzentrat 9 in den Abscheider 7 eintritt.

Durch Messungen wurde festgestellt, daß im gesamten Spaltraum 11 eine Wasseranhangswirkung zwischen der Adhäsionsrückwand und der Gewebefilteroberfläche besteht. Die Erweiterung des Spaltraumes 11 ist so geschaffen, daß der über die Länge der Filtereinrichtung ansteigende Reinwasseranteil 8 ohne Staueffekt nach unten abgeleitet werden kann. Dabei sollte dafür gesorgt werden, daß im Spaltraum 11 der Reinwasseranteil 8 stets in Kontakt mit der Gewebefilterfläche 4 gehalten wird. Das Volumen des Spaltraums kann durch Vergrößerung oder Verkleinerung des Abstandes 2 zwischen Gewebefilter 4 und Adhäsionsrückwand 6 an die zu erwartende Regenwassermenge angepaßt werden.

## Patentansprüche

1. Filtereinrichtung für flüssige Medien insbesondere für Schmutzwasser, bestehend aus einem Einlauftrichter, einem Filtergewebe und einem Schmutzabscheider,
wobei
- zwischen dem Einlauftrichter und dem Filtergewebe (4) eine Ringdüse (3) angeordnet ist mit einer zur Schmutzwasserseite hin konkav gewölbten Oberfläche, die an ihrem Auslaufende unmittelbar mit dem Filtergewebe (4) in Kontakt steht,
- hinter dem Filtergewebe (4) eine Adhäsionsrückwand (6) angeordnet ist, in der unmittelbar unterhalb der Ringdüse (3) eine Ausbuchtung (10) angeordnet ist, die sich bis zum Filtergewebe (4) hin erstreckt und dieses berührt, wobei die Ausbuchtung (10) in Form einer oder mehrerer umlaufenden Sicken in die Adhäsionsrückwand (6) eingeformt ist
- und sich zwischen Adhäsionsrückwand (6) und Filtergewebe (4) ein Spaltraum (11) erstreckt, dessen radialer Durchlaßquerschnitt sich vom Einlauf bis zum Schmutzwasserabscheider hin kontinuierlich vergrößert.

2. Filtereinrichtung nach einem der vorhergehenden Ansprüche,
dadurch gekennzeichnet,
daß die Adhäsionsrückwand (6) eine zylindrische Form aufweist.

3. Filtereinrichtung nach einem der vorhergehenden Ansprüche,
dadurch gekennzeichnet,
daß das Filtergewebe (4) aus einer konisch geformten Zylinderwand besteht, wobei der weitere Konus auf der Einlaufseite an der Kontaktstelle (5) mit der Ringdüse (3) dichtend anliegt.

## Claims

1. A filtration device for liquid media, especially for dirty water, consisting of an inlet funnel, a filtration fabric and a dirt separator,
wherein
- between the inlet funnel and the filtration fabric (4) there is arranged an annular nozzle (3) whose surface facing the dirty water is curved concavely and which, at its outlet end, is in direct contact with the filtration fabric (4),
- behind the filtration fabric (4) there is arranged a rear adhesion wall (6) in which, directly below the annular nozzle (3), there is provided a bulging region (10) which extends as far as the filtration fabric (4) and contacts same, with the bulging region (10) being formed into the rear adhesion wall (6) in the form of one or several continuous beads,
- and between the rear adhesion wall (6) and the filtration fabric (4) there extends a gap (11) whose radial opening cross-section continuously increases from the inlet to the dirty water separator.

2. A filtration device according to any one of the preceding claims,
characterised in
that the rear adhesion wall (6) has a cylindrical shape.

3. A filtration device according to any one of the preceding claims,
characterised in
that the filtration fabric (4) consists of a conically shaped cylinder wall, with the wide cone at the inlet end sealingly resting against the region of contact (5) with the annular nozzle (3).

## Revendications

1. Dispositif de filtration pour substances liquides, notamment pour eaux usées, composé d'un entonnoir d'entrée, d'un tissu filtrant et d'un séparateur d'impuretés, sachant qu'entre l'entonnoir d'entrée et le tissu filtrant (4) est disposée une buse annulaire (3) présentant une surface concave sur le côté des eaux usées, qui est directement en contact avec le tissu filtrant (4) à son extrémité de sortie, que derrière le tissu filtrant (4) est placée une paroi arrière d'adhérence (6) dans laquelle est ménagé un creux (10) directement sous la buse annulaire (3), lequel creux s'étend jusqu'au tissu filtrant (4) et touche ce dernier, sachant que le creux (10) est ménagé dans la paroi arrière d'adhérence (6) sous la forme d'un ou de plusieurs sillons circulaires, et sachant qu'entre la paroi arrière d'adhérence (6) et le tissu filtrant (4) s'étend un intervalle (11) dont la section de passage radiale s'élargit progressivement de l'entrée jusqu'au séparateur d'impuretés.

2. Dispositif de filtration selon la revendication 1, caractérisé en ce que la paroi arrière d'adhérence (6) présente une forme cylindrique.

3. Dispositif de filtration selon l'une des revendications précédentes, caractérisé en ce que le tissu filtrant (4) est composé d'une paroi cylindrique en forme de cône, sachant que du côté de l'entrée, le cône est appliqué de façon étanche contre la buse annulaire (3) au niveau du point de contact (5).
